# EUROPÄISCHE PATENTSCHRIFT

(11) **EP 3 741 485 B1**
(45) Veröffentlichungstag und Bekanntmachung des Hinweises auf die Patenterteilung: **03.07.2024**
(21) Anmeldenummer: 19175471.2
(22) Anmeldetag: 20.05.2019
(51) Int. Cl.: B23D 57/02, B25F 5/02, B27B 17/00, B27B 17/02, F16B 5/02, F16B 35/04

(54) **ARBEITSGERÄT UND STEHBOLZEN FÜR EIN ARBEITSGERÄT**
WORK DEVICE AND STUD BOLT FOR A WORK IMPLEMENT
APPAREIL DE TRAVAIL ET GOUJONS POUR UN APPAREIL DE TRAVAIL

(43) Veröffentlichungstag der Anmeldung: 25.11.2020
(73) Patentinhaber: Andreas Stihl AG & Co. KG, 71336 Waiblingen (DE)
(72) Erfinder: POSNER, Benedikt, 70567 Stuttgart (DE)
(74) Vertreter: Reinhardt, Annette

(56) Entgegenhaltungen:
- EP-A1- 3 409 957
- DE-A1- 1 475 992
- DE-U1- 29 721 319
- DE-U1-202011 050 893
- US-A1- 2011 232 110

## Beschreibung

Die Erfindung betrifft ein Arbeitsgerät nach dem Oberbegriff des Anspruchs 1 und einen Stehbolzen, gemäß dem Oberbegriff des Patentanspruchs 18, für ein solches Arbeitsgerät.

Aus der US 9,506,486 B2 ist eine Motorsäge bekannt, deren Führungsschiene an Stehbolzen befestigt ist, die über eine Gewindeverbindung mit dem Gehäuse der Motorsäge verbunden sind. Als Tiefenanschlag weisen die Stehbolzen jeweils eine Anschlagsplatte auf, die über den Nenndurchmesser des Gewindes hervorsteht. Im Betrieb der Motorsäge werden Vibrationen von der Führungsschiene auf die Gewindeverbindung übertragen. Hierdurch können insbesondere bei Verwendung von langen Führungsschienen Risse im Gehäuse entstehen.

Aus der EP 3 409 957 A1 ist ein Bolzen zur Befestigung eines Navigationsgeräts an einem Armaturenbrett eines Autos bekannt. Die Bolzen sind durch ein Montagepaket in ein Innengewinde einer Aufnahme des Navigationsgeräts geschraubt. Das Innengewinde erstreckt sich lediglich über einen Teilbereich der Aufnahme.

Aus der US 2011/0232110 A1, die den Oberbegriff des Patentanspruchs 1 offenbart, ist ein Stehbolzen einer Motorkettensäge zur Befestigung einer Führungsschiene mit einer Sägekette bekannt.

Dokument DE 14 75 992 A1 offenbart einen Stehbolzen gemäß dem Oberbegriff des Patentanspruchs 18.

Aus der DE 20 2011 050 893 U1 ist eine Motorkettensäge mit Stehbolzen und einem Metallrahmen aus einem Magnesiumlegierungswerkstoff bekannt.

Aus der DE 297 21 319 U1 ist eine Steighilfe mit einem Stehbolzen bekannt. Der Stehbolzen weist ein Außengewinde auf, auf das eine Mutter aufgeschraubt ist. Zwischen der Mutter und einem Querkraftübertragungselement ist eine Platte eingeklemmt. Das Querkraftübertragungselement überträgt bei Belastung des Stehbolzens in Richtung quer zu seiner Längsrichtung Querkräfte in Form von Axialkräften auf die Platte.

Der Erfindung liegt die Aufgabe zugrunde, ein gattungsgemäßes Arbeitsgerät derart weiterzubilden, dass der Stehbolzen im Betrieb haltbar und verschleißarm gehalten ist. Diese Aufgabe wird durch ein Arbeitsgerät mit den Merkmalen des Anspruchs 1 gelöst. Eine weitere Aufgabe der Erfindung liegt darin, einen Stehbolzen für ein Arbeitsgerät anzugeben, der haltbar und verschleißarm im Arbeitsgerät befestigt werden kann. Diese Aufgabe wird durch einen Stehbolzen mit den Merkmalen des Anspruchs 18 gelöst.

Die Erfindung sieht vor, dass das Außengewinde des Stehbolzens im ersten Unterabschnitt des ersten Abschnitts angeordnet ist. Der erste Abschnitt des Stehbolzens ist zumindest teilweise in der Aufnahme des Gehäuseteils des Arbeitsgeräts angeordnet. Der zweite Unterabschnitt des ersten Abschnitts des Stehbolzens weist einen Abstützbereich zur Übertragung von Querkräften auf das Gehäuseteil auf, der sich zumindest mittelbar an der Aufnahme des Gehäuses abstützt und in Axialrichtung in einem Abstand zur Gewindeverbindung vom Außengewinde des Stehbolzens und dem Innengewinde der Aufnahme angeordnet ist. Im Bereich der Gewindeverbindung überlappen sich das Außengewinde des Stehbolzens und das Innengewinde der Aufnahme bezüglich der Axialrichtung.

Dadurch findet die Übertragung von Längskräften von dem Stehbolzen auf das Gehäuseteil räumlich getrennt von der Übertragung von Querkräften von dem Stehbolzen auf das Gehäuseteil statt. Mit Längskräften sind in Axialrichtung auf den Stehbolzen wirkende Kräfte bezeichnet. Mit Querkräften sind quer zur Axialrichtung auf den Stehbolzen wirkende Kräfte bezeichnet. Es hat sich gezeigt, dass insbesondere die Übertragung von Querkräften vom Stehbolzen auf das Gehäuseteil für eine Rissbildung im Bereich des Innengewindes des Gehäuseteils verantwortlich ist. Durch den Abstand zwischen dem Abstützbereich und der Gewindeverbindung von Außengewinde des Stehbolzens und Innengewinde der Aufnahme werden über das Außengewinde des Stehbolzens kleinere Kräfte übertragen. Insbesondere werden nur sehr geringe oder keine Querkräfte vom Außengewinde auf das Innengewinde übertragen. Dadurch wird das Innengewinde des Gehäuseteils deutlich weniger beansprucht und das Risiko einer Rissbildung in dem Gehäuseteil im Bereich des Innengewindes ist ausgeschlossen oder zumindest reduziert. Die hauptsächlich für die Rissbildung verantwortlichen Querkräfte werden weitgehend über den separat vom Außengewinde ausgebildeten Abstützbereich vom Stehbolzen auf das Gehäuseteil übertragen. Dadurch können die kritischen Querkräfte gezielt von einer Stelle des Gehäuseteils aufgenommen werden, die weniger anfällig für Rissbildung ist. Dadurch ist der Stehbolzen haltbar und verschleißarm in der Aufnahme des Gehäuseteils gehalten.

Der Abstützbereich zur Übertragung von Querkräften auf das Gehäuseteil kann unmittelbar an der Aufnahme anliegen. Bei einer solchen unmittelbaren Abstützung liegt der Abstützbereich direkt an der Aufnahme an. Bei einer mittelbaren Abstützung hingegen ist ein Bauteil zwischen dem Abstützbereich und der Aufnahme angeordnet, über das die Querkräfte vom Abstützbereich auf das Gehäuseteil übertragen werden können. Ein solches Bauteil zur mittelbaren Abstützung ist insbesondere ein verformbares Material zum Ausgleich von Toleranzen oder ein Füllmaterial wie Klebstoff, mit dem ein Spalt zwischen Stehbolzen und Gehäuseteil nach der Montage des Stehbolzens ausgefüllt werden kann. Dadurch kann sichergestellt werden, dass auch bei ungünstiger Toleranzlage die Abstützung quer zur Axialrichtung am Abstützbereich erfolgt und nicht am Außengewinde.

Vorteilhaft ist im zweiten Unterabschnitt des ersten Abschnitts eine Verdickung mit einem senkrecht zur Axialrichtung gemessenen Durchmesser angeordnet, der größer als ein Nenndurchmesser des Außengewindes des Stehbolzens ist. Zweckmäßig ist der Abstützbereich des zweiten Unterabschnitts Teil der Verdickung. Vorteilhaft nimmt der Durchmesser der Verdickung in dem Abstützbereich in Axialrichtung kontinuierlich zu. Dadurch können die Querkräfte auf einfache Weise von der Verdickung auf das Gehäuseteil übertragen werden. Ein Teil der Längskräfte kann als Querkräfte auf das Gehäuse übertragen werden.

Insbesondere ist der Abstützbereich des Stehbolzens in einem Abstand zum Außengewinde des Stehbolzens angeordnet.

Zweckmäßig ist die Verdickung zumindest in dem Abstützbereich konisch. Vorteilhaft ist der Abstützbereich konisch.

Insbesondere ist die Verdickung zumindest in dem Abstützbereich in Axialrichtung konvex gekrümmt. Vorteilhaft ist die Verdickung konvex gekrümmt.

Vorteilhaft ist vorgesehen, dass der Abstand zwischen dem Abstützbereich und der Gewindeverbindung von dem Außengewinde und dem Innengewinde mindestens 10%, insbesondere mindestens 20%, bevorzugt mindestens 50% des Nenndurchmessers des Außengewindes des zweiten Unterabschnitts des Stehbolzens beträgt. Dadurch ist eine ausreichende räumliche Trennung des Abstützbereichs zur Übertragung von Querkräften und des Außengewindes zur Übertragung von Längskräften gewährleistet.

In vorteilhafter Weiterbildung der Erfindung ist vorgesehen, dass die Aufnahme an ihrem dem zweiten Abschnitt des Stehbolzens zugewandten Ende einen Öffnungsabschnitt besitzt, und dass der Öffnungsabschnitt eine Anlagefläche zur Anlage an dem Stehbolzen besitzt, die in einem in Axialrichtung gemessenen Abstand zum Innengewinde der Aufnahme angeordnet ist. Insbesondere beträgt der Abstand zwischen Anlagefläche und Innengewinde mindestens 5% des Nenndurchmessers des Außengewindes.

Vorteilhaft nimmt der Durchmesser des Öffnungsabschnitts in Axialrichtung zu. Durch diese Gestaltung ist sichergestellt, dass sich der Abstützbereich unabhängig von auftretenden Toleranzen stets am Öffnungsabschnitt abstützen kann.

Zweckmäßig ist der Öffnungsabschnitt konisch. Insbesondere ist der Öffnungsabschnitt zumindest im Bereich der Anlagefläche in Axialrichtung konisch.

Zweckmäßig ist der Öffnungsabschnitt zumindest im Bereich der Anlagefläche entlang der Axialrichtung konvex gekrümmt. Vorteilhaft ist der Öffnungsabschnitt konvex gekrümmt. Dadurch kann der Stehbolzen mit seinem Abstützbereich auf einfache Weise an definierten Stellen des Öffnungsabschnitts der Aufnahme anliegen.

Zweckmäßig ist der Öffnungsabschnitt der Aufnahme in Axialrichtung von einer Auflagefläche des Gehäuseteils begrenzt. Die Auflagefläche kann zur Auflage des Stehbolzens in Axialrichtung dienen. Zweckmäßig ist der Öffnungsabschnitt der Aufnahme in Axialrichtung von einem oberen Rand und in entgegengesetzter Richtung von einem unteren Rand begrenzt. An dem oberen Rand hat die Aufnahme vorteilhaft ihren größten Durchmesser und geht dort insbesondere in die Auflagefläche über. An dem unteren Rand hat die Aufnahme vorteilhaft ihren kleinsten Durchmesser und geht dort insbesondere in den ersten Unterabschnitt über. Vorteilhaft weist die Abstützfläche in Axialrichtung zum unteren Rand einen Abstand auf. Vorteilhaft weist der Abstützbereich in Axialrichtung sowohl zum oberen Rand als auch zum unteren Rand einen Abstand auf. Dadurch stützt sich der Stehbolzen zwischen den Rändern - also in einem in Axialrichtung mittleren Bereich des Öffnungsabschnitts - ab. So erfolgt die Krafteinleitung in das Gehäuse nicht konzentriert an einem exponierten Rand. Hierdurch werden der obere und der untere Rand der Aufnahme weniger stark beansprucht. Eine Beschädigung des Gehäuses an der Auflagefläche bzw. des Gegengewindes kann so vermieden werden. Weiterhin kann ein Einkerben der Ränder des Öffnungsabschnitts in die Verdickung des Stehbolzens und der damit verbundene Verschleiß auf einfache Weise vermieden werden.

In vorteilhafter Weiterbildung der Erfindung weist der zweite Abschnitt des Stehbolzens an seinem dem ersten Abschnitt des Stehbolzens zugewandten Ende einen dritten Unterabschnitt mit einem Bund als Anschlag für das Werkzeug auf. Zweckmäßig weist der zweite Abschnitt des Stehbolzens einen vierten Unterabschnitt mit einem Spanngewinde zum Aufschrauben einer Mutter auf. Durch das Aufschrauben der Mutter kann das Werkzeug gegen das Gehäuse, insbesondere gegen die Auflagefläche des Gehäuses gespannt werden.

Zweckmäßig ist der Stehbolzen auswechselbar. Insbesondere ist der Stehbolzen von der Seite der Auflagefläche her auswechselbar.

In besonderer Ausgestaltung der Erfindung ist vorgesehen, dass der Stehbolzen aus einem ersten Werkstoff, insbesondere aus Stahl besteht, und dass das Gehäuseteil aus einem anderen, zweiten Werkstoff, insbesondere aus Magnesium besteht.

Es ist vorgesehen, dass das Arbeitsgerät eine Motorkettensäge ist, dass das Werkzeug eine Führungsschiene mit einer Sägekette ist, und dass der Stehbolzen ein Führungselement für die Führungsschiene bildet. Die Führungsschiene steht in radialer Richtung asymmetrisch über den Stehbolzen hervor.

Der erfindungsgemäße Stehbolzen ist so ausgelegt, dass er in einem erfindungsgemäßen Arbeitsgerät verwendet werden kann.

Ausführungsbeispiele der Erfindung werden im Folgenden anhand der Zeichnung erläutert. Es zeigen:
- Fig. 1: eine schematische perspektivische Darstellung einer Motorkettensäge mit einem Stehbolzen und einer Führungsschiene,
- Fig. 2: eine Explosionsdarstellung der Motorkettensäge aus Fig. 1,
- Fig. 3: eine teilgeschnittene Darstellung eines in der Aufnahme eines Gehäuseteils angeordneten Stehbolzens,
- Fig. 4 bis 11: Detaildarstellungen verschiedener Ausführungsformen des Stehbolzens und des Gehäuseteils aus Fig. 3 und
- Fig. 12 bis 19: teilgeschnittene Darstellungen verschiedener Ausführungen von Arbeitsgeräten mit unterschiedlichen Stehbolzen, die sich an unterschiedlich gestalteten Gehäuseteilen abstützen.

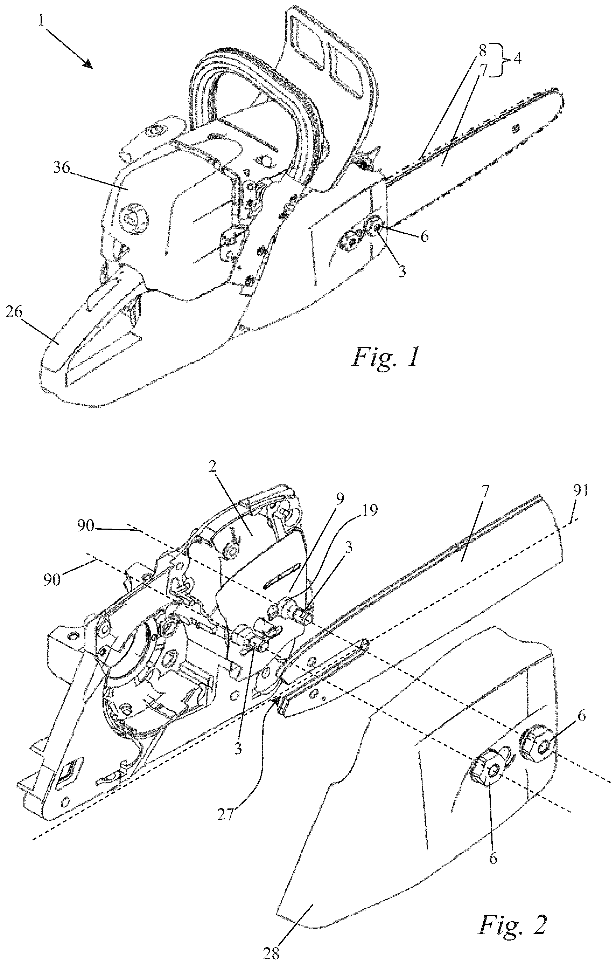

Fig. 1 zeigt ein handgeführtes Arbeitsgerät 1. Bei dem handgeführten Arbeitsgerät 1 handelt es sich um eine Motorkettensäge. Das Arbeitsgerät 1 weist einen Handgriff 26 und eine Führungsschiene 7 auf, an der eine Sägekette 8 umlaufend geführt ist. Der Handgriff 26 ist an einer Rückseite eines Gehäuses 36 der Motorkettensäge angeordnet.

Die Führungsschiene 7 ragt an einer Vorderseite des Gehäuses 36 der Motorkettensäge vom Gehäuse 36 weg. Die Führungsschiene 7 und die Sägekette 8 bilden gemeinsam ein Werkzeug 4 des Arbeitsgeräts 1. Das Werkzeug 4 besitzt eine Aussparung 27, durch die mindestens ein Stehbolzen 3 ragt. Ein an den Stehbolzen 3 geschraubtes Befestigungselement 6 spannt die Schiene gegen das Gehäuse 36. Das Befestigungselement 6 ist im Ausführungsbeispiel eine Mutter.

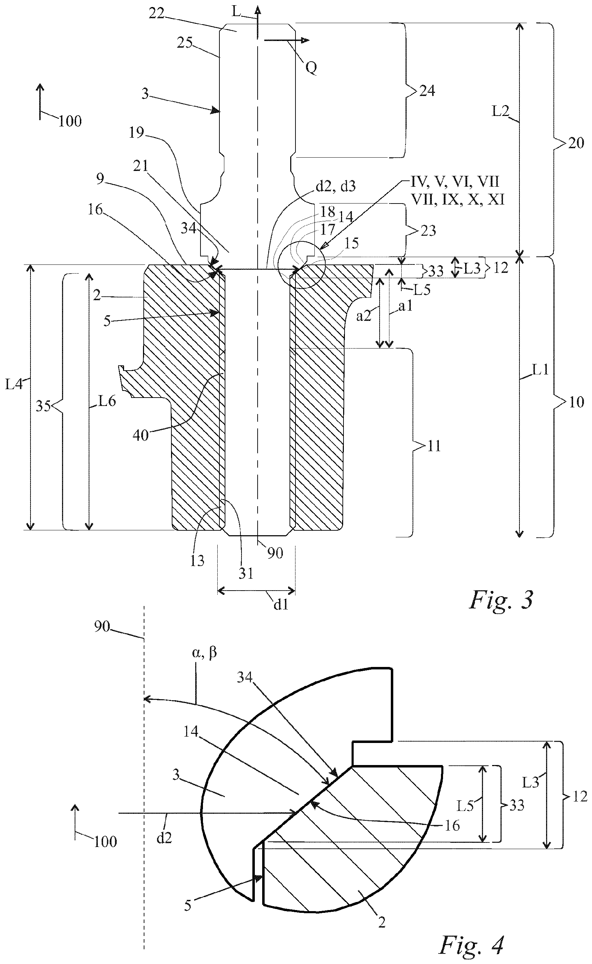

Wie in Fig. 2 dargestellt, besitzt das Arbeitsgerät 1 ein Gehäuseteil 2, das einen Teil des Gehäuses 36 bildet. Am Gehäuseteil 2 ist ein nicht dargestellter Motor zum Antrieb der Sägekette 8 festgelegt. Im Ausführungsbeispiel ist das Gehäuseteil 2 ein Teil eines Motorgehäuses, an dem der Motor angeordnet ist. Der Motor ist vorteilhaft ein Verbrennungsmotor, und das Gehäuseteil 2 bildet einen Teil eines Kurbelgehäuses des Verbrennungsmotors. Aus dem Gehäuseteil 2 steht der mindestens eine Stehbolzen 3 hervor. Im Ausführungsbeispiel sind zwei Stehbolzen 3 vorgesehen. Der Stehbolzen 3 erstreckt sich entlang einer Längsachse 90. Der Stehbolzen 3 ist senkrecht zu einer in Fig. 3 dargestellten Auflagefläche 9 orientiert. In Fig. 2 ist die Auflagefläche 9 durch ein Seitenblech 37 abgedeckt. Das Seitenblech weist eine Öffnung auf, mit der es auf den Stehbolzen 3 gesteckt ist.

Der Stehbolzen 3 besteht aus Stahl. Das Gehäuseteil 2 besteht vorteilhaft zumindest teilweise aus Leichtmetall, insbesondere aus Magnesium. Es kann auch vorgesehen sein, dass das Gehäuseteil aus mehreren verschiedenen Werkstoffen besteht. Insbesondere kann das Gehäuseteil 2 einen Teil eines Kurbelgehäuses eines Verbrennungsmotors des Arbeitsgeräts bilden. So kann beispielsweise der Öffnungsabschnitt des Gehäuseteils in einem ersten Teil des Gehäuseteils angeordnet sein und das Innengewinde der Aufnahme in zweiten Teil des Gehäuseteils, der beispielsweise das Kurbelgehäuse begrenzt. Die beiden Teile des Gehäuseteils sind unabhängig vom Stehbolzen fest miteinander verbunden, insbesondere verpresst, verklebt oder verschweißt.

Der Stehbolzen 3 ist auswechselbar. Hierzu kann der Stehbolzen 3, insbesondere von der Auflagefläche 9 aus, aus dem Gehäuseteil 2 herausgeschraubt werden.

An ihrem hinteren Ende weist die Führungsschiene 7 die Aussparung 27 auf. Das hintere Ende der Führungsschiene 7 ist dem Handgriff 26 zugewandt. Die Führungsschiene besitzt eine Längsmittelachse 91. Die Aussparung 27 der Führungsschiene 7 ist vorteilhaft symmetrisch bezüglich einer von der Längsmittelachse 91 und der Längsachse 90 aufgespannten Ebene angeordnet. Die Aussparung 27 erstreckt sich entlang der Längsmittelachse 91. Im Ausführungsbeispiel ist die Aussparung 27 U-förmig und zum hinteren Ende der Führungsschiene 7 hin offen ausgebildet. Es kann auch vorgesehen sein, dass die Aussparung 27 als Langloch ausgebildet ist.

Zur Befestigung der Führungsschiene 7 am Gehäuseteil 2 wird die Führungsschiene 7 mit ihrer Aussparung 27 über die beiden Stehbolzen 3 gesteckt. Die Stehbolzen 3 weisen einen Bund 19 für die Führungsschiene 7 auf, an dem die Führungsschiene 7 mit dem Umfang der Aussparung 27 geführt ist. Wenn die Führungsschiene 7 sich in der gewünschten Position befindet, werden die Stehbolzen 3 durch Löcher eines Kettenraddeckels 28 des Arbeitsgeräts 1 geführt. Der Kettenraddeckel 28 deckt die U-förmige Aussparung 27 der Führungsschiene 7 zumindest teilweise ab. Die Führungsschiene 27 ist zwischen dem Gehäuseteil 2 und dem Kettenraddeckel 28 angeordnet. Auf die aus dem Kettenraddeckel 28 ragenden Stehbolzen 3 werden als Befestigungsmittel 6 Muttern geschraubt. Die Muttern pressen den Kettenraddeckel 28 und die Führungsschiene 27 gegen das Gehäuseteil 2. Auf diese Weise ist die Führungsschiene 7 am Gehäuseteil 2 befestigt.

Im Betrieb des Arbeitsgeräts 1 kann es zu Vibrationen der Führungsschiene 7 kommen. Durch die Vibrationen oder auch beim Sägen mit der Motorkettensäge werden Kräfte von der Führungsschiene 7 auf den Stehbolzen 3 übertragen und vom Stehbolzen 3 in das Gehäuseteil 2 eingeleitet.

Wie in Fig. 3 dargestellt, ist der Stehbolzen 3 in einer Aufnahme 5 des Gehäuseteils 2 angeordnet. Der Stehbolzen 3 erstreckt sich in einer Axialrichtung 100. Die Axialrichtung 100 verläuft entlang der Längsachse 90. Der Stehbolzen 3 weist in Axialrichtung 100 einen ersten Abschnitt 10 und einen zweiten Abschnitt 20 auf. Der erste Abschnitt 10 des Stehbolzens 3 ist zumindest teilweise in der Aufnahme 5 des Gehäuseteils 2 angeordnet. Bezüglich der Axialrichtung 100 befinden sich mehr als 90% des ersten Abschnitts 10 des Stehbolzens 3 in der Aufnahme 5 des Gehäuseteils 2. Der zweite Abschnitt 20 befindet sich vollständig außerhalb der Aufnahme 5 des Gehäuseteils 2. Die Axialrichtung 100 verläuft in Richtung vom ersten Abschnitt 10 des Stehbolzens 3 zum zweiten Abschnitt 20 des Stehbolzens 3. Der zweite Abschnitt 20 des Stehbolzens 3 ragt in Axialrichtung 100 aus dem Gehäuseteil 2 hervor.

Der zweite Abschnitt 20 des Stehbolzens 3 weist an seinem dem ersten Abschnitt 10 des Stehbolzens 3 zugewandten Ende 21 einen dritten Unterabschnitt 23 mit dem Bund 19 für das Werkzeug 4 auf. Der zweite Abschnitt 20 des Stehbolzens 3 weist an seinem freien Ende 22 einen vierten Unterabschnitt 24 auf. Der dritte Unterabschnitt 23 ist bezüglich der Axialrichtung 100 zwischen dem vierten Unterabschnitt 24 und dem ersten Abschnitt 10 des Stehbolzens 3 angeordnet. Der vierte Unterabschnitt 24 des zweiten Abschnitts 20 weist ein Spanngewinde 25 auf. Auf das Spanngewinde 25 kann als Befestigungsmittel 6 die in Fig. 2 dargestellte Mutter aufgeschraubt werden. Das Werkzeug 4 wird am zweiten Abschnitt 20 des Stehbolzens 3 befestigt, also an dem Teil des Stehbolzens 3, der aus dem Gehäuseteil 2 hervorragt.

Bei der Befestigung der Führungsschiene 7 am Gehäuseteil 2 wird die Führungsschiene 7 bezüglich der Axialrichtung 100 im dritten Unterabschnitt 23 des zweiten Abschnitts 20 des Stehbolzens 3 angeordnet. Die auf das Spanngewinde 25 aufgeschraubte Mutter presst die Führungsschiene dann gegen die Auflagefläche 9 des Gehäuseteils 2. Auf diese Weise wird die Führungsschiene 7 am Gehäuseteil 2 gehalten. Die Auflagefläche 9 begrenzt das Gehäuseteil 2. Im Bereich um den Stehbolzen 3 herum ist die Auflagefläche 9 senkrecht zur Längsachse 90 orientiert. Die Längsachse 90 ist die Längsachse des Stehbolzens 3.

Der erste Abschnitt 10 des Stehbolzens 3 weist einen ersten Unterabschnitt 11 auf. Der erste Abschnitt 10 des Stehbolzens 3 weist einen zweiten Unterabschnitt 12 auf. Der erste Unterabschnitt 11 des ersten Abschnitts 10 liegt dem zweiten Abschnitt 20 des Stehbolzens 3 abgewandt. Der zweite Unterabschnitt 12 des ersten Abschnitts 10 liegt dem zweiten Abschnitt 20 des Stehbolzens 3 zugewandt. Der zweite Unterabschnitt 12 ist bezüglich der Axialrichtung 100 zwischen dem ersten Unterabschnitt 11 und dem zweiten Abschnitt 20 des Stehbolzens 3 angeordnet. Der zweite Unterabschnitt 12 ist im Ausführungsbeispiel nach Fig. 3 in Axialrichtung 100 in einem Abstand a2 zum ersten Unterabschnitt 11 angeordnet.

Der erste Abschnitt 10 des Stehbolzens 3 weist im ersten Unterabschnitt 11 ein Außengewinde 13 auf. Im Ausführungsbeispiel erstreckt sich das Außengewinde 13 in Axialrichtung 100 über die gesamte Längserstreckung des ersten Unterabschnitts 11. Das Außengewinde 13 ist ausschließlich im ersten Unterabschnitt 11 des Stehbolzens 3 angeordnet. Die Aufnahme 5 des Gehäuseteils 2 weist ein Innengewinde 31 auf. Der erste Unterabschnitt 11 des Stehbolzens 3 ist mit seinem Außengewinde 13 in das Innengewinde 31 der Aufnahme 5 des Gehäuseteils 2 geschraubt. Längskräfte L werden von der Führungsschiene 7 über das Außengewinde 13 des Stehbolzens 3 auf das Innengewinde 31 der Aufnahme 5 des Gehäuseteils 2 übertragen. Längskräfte L sind Kräfte, die in Axialrichtung 100 oder entgegen der Axialrichtung 100 wirken.

Der erste Abschnitt 10 des Stehbolzens 3 erstreckt sich in Axialrichtung 100 über eine Länge L1. Das Außengewinde 13 des Stehbolzens 3 erstreckt sich ausgehend von einem dem zweiten Abschnitt 20 abgewandten Ende des Stehbolzens 3 in Axialrichtung 100 über mehr als die Hälfte der Länge L1 des ersten Abschnitts 10 des Stehbolzens 3. Das Außengewinde 13 des Stehbolzens 3 erstreckt sich in Axialrichtung 100 vorteilhaft über weniger als 90%, insbesondere weniger als 75% der Länge L1 des ersten Abschnitts 10 des Stehbolzens 3. Auf diese Weise werden die Längskräfte erst weit im Inneren der Aufnahme 5 in das Gehäuseteil 2 eingeleitet.

Der zweite Abschnitt 20 des Stehbolzens 3 weist in Axialrichtung 100 eine Länge L2 auf. Die Länge L1 des ersten Abschnitts 10 des Stehbolzens 3 ist größer als die Länge L2 des zweiten Abschnitts 20 des Stehbolzens 3. Die Länge L1 des ersten Abschnitts 10 des Stehbolzens 3 ist größer als das 2,0fache, insbesondere größer als das 3,0fache des Nenndurchmessers d1 des Außengewindes 13 des Stehbolzens 3. Der erste Abschnitt 10 grenzt an den zweiten Abschnitt 20 an. Der zweite Unterabschnitt 12 des ersten Abschnitts 10 weist in Axialrichtung 100 eine Länge L3 auf. Die Länge L3 des zweiten Unterabschnitts 12 beträgt zwischen 2% und 20%, im Ausführungsbeispiel zwischen 5% und 10% der Länge L1 des ersten Abschnitts 10. Die Länge L3 des zweiten Unterabschnitts 12 beträgt weniger als das 1,5fache, insbesondere weniger als das 1,0fache des Nenndurchmessers d1 des Außengewindes 13.

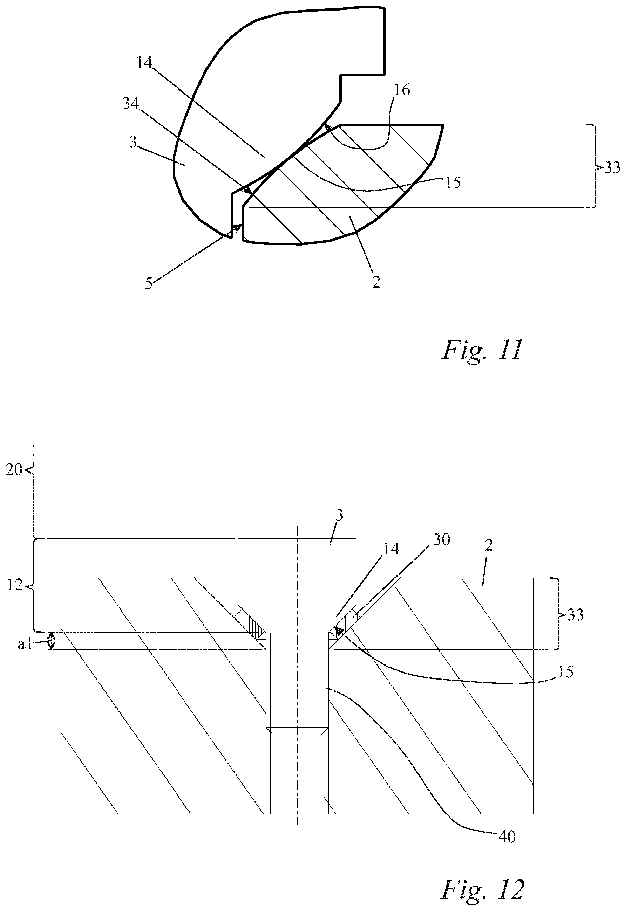

Der erste Abschnitt 10 des Stehbolzens 3 weist im zweiten Unterabschnitt 12 den Abstützbereich 15 zur Abstützung des Stehbolzens 3 an der Aufnahme 5 des Gehäuseteils 2 auf. Der Abstützbereich 15 liegt im Ausführungsbeispiel nach Fig. 3 zur Übertragung von Querkräften Q auf das Gehäuseteil 2 an der Aufnahme 5 an. Querkräfte Q sind Kräfte, die in Richtung quer zur Axialrichtung 100 wirken. Der Abstützbereich 15 stützt sich derart an der Aufnahme 5 ab, dass von ihm im Betrieb des Arbeitsgeräts 1 Querkräfte Q auf die Aufnahme 5 des Gehäuseteils 2 übertragen werden. Die Übertragung der Querkräfte Q erfolgt hierbei nicht hauptsächlich durch Reibung, sondern dadurch, dass der Abstützbereich 15 des zweiten Unterabschnitts 12 in Querrichtung gegen die Aufnahme 5 des Gehäuseteils 2 drückt. In den Ausführungsbeispielen nach den Figuren 4 bis 11 stützt sich der Abstützbereich 15 unmittelbar an der Aufnahme 5 ab. In diesen Ausführungsbeispielen kontaktiert der Abstützbereich 15 des Stehbolzens 3 die Aufnahme 5 des Gehäuseteils 2. In den Ausführungsbeispielen nach den Figuren 12 bis 20 stützt sich der Abstützbereich 15 zur Übertragung von Querkräften Q auf das Gehäuseteil 2 mittelbar an der Aufnahme 5 ab. Das befestigte Werkzeug 4 und der Abstützbereich sind in Axialrichtung 100 überlappungsfrei.

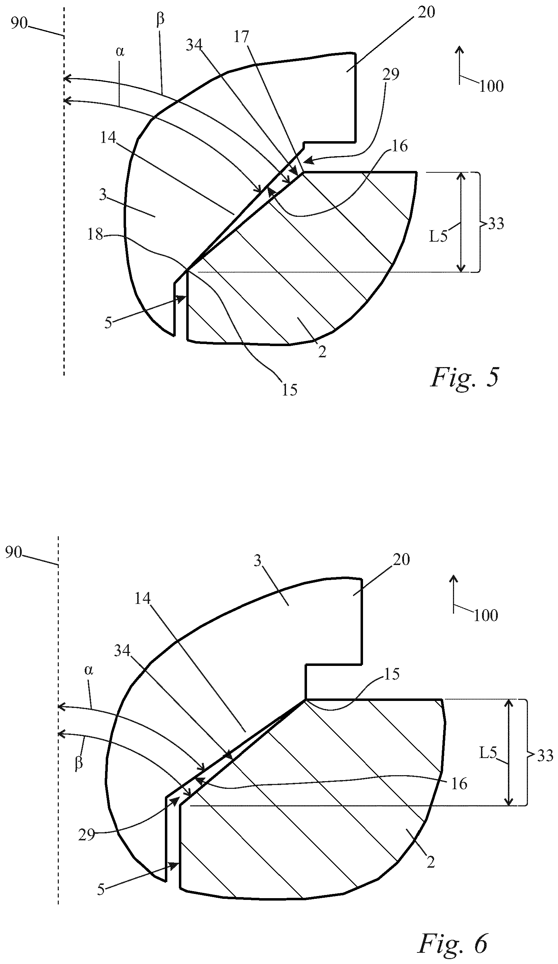

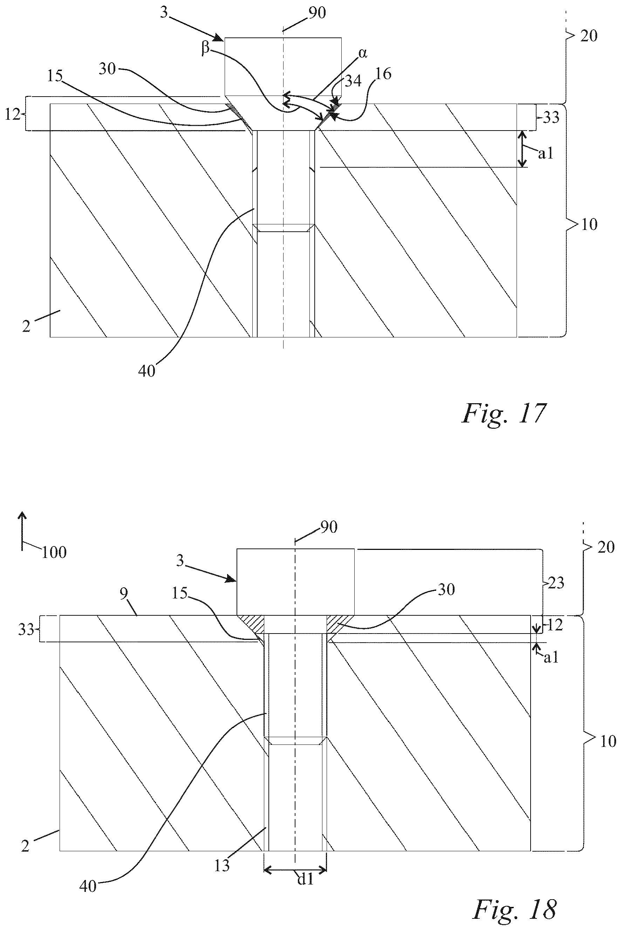

In den Ausführungsbeispielen nach den Figuren 5, 6 und 8 bis 11 erstreckt sich der Abstützbereich 15 entlang einer um die Längsmittelachse 90 umlaufenden Linie. Die umlaufende Linie verläuft auf dem zweiten Unterabschnitt 12 des ersten Abschnitts 10 des Stehbolzens 3. Die umlaufende Linie ist in diesen Ausführungsbeispielen kreisförmig. In den Ausführungsbeispielen nach den Figuren 4, 7 und 12 bis 17 erstreckt sich der Abstützbereich 15 entlang einer Mantelfläche eines gedachten Kreiskegelstumpfes. In den Ausführungsbeispielen nach den Figuren 18 bis 20 erstreckt sich der Abstützbereich 15 entlang der Mantelfläche eines gedachten Zylinders. In allen Ausführungsbeispielen erstreckt sich der Abstützbereich 15 erst auf dem zweiten Unterabschnitt 12 des ersten Abschnitts 10 des Stehbolzens 3. In allen Ausführungsbeispielen weist eine Normale auf die Außenfläche des zweiten Unterabschnitts 12 im Abstützbereich 15 eine Vektorkomponente in Richtung radial zur Längsachse 90 auf.

Wie in Fig. 3 dargestellt, ist der Abstützbereich 15 zur Übertragung von Querkräften Q in Axialrichtung 100 in einem Abstand a1 zu einer Gewindeverbindung 40 von Außengewinde 13 des Stehbolzens 3 und Innengewinde 31 der Aufnahme 5 angeordnet. Der Abstand a1 zwischen dem Abstützbereich 15 und der Gewindeverbindung 40 des Außengewindes 13 und des Innengewindes 31 beträgt vorteilhaft mindestens 10%, insbesondere mindestens 20%, bevorzugt mindestens 50% des Nenndurchmessers d1 des Außengewindes 13 des zweiten Unterabschnitts 12 des ersten Abschnitts 10 des Stehbolzens 3. In den Ausführungsbeispielen beträgt der Abstand a1 zwischen dem Abstützbereich 15 und der Gewindeverbindung 40 des Außengewindes 13 und des Innengewindes 31 mindestens 80% des Nenndurchmessers d1 des Außengewindes 13. In den Ausführungsbeispielen nach den Figuren 6, 8 bis 11 und 13 ist der Abstand a1 zwischen dem Abstützbereich 15 und der Gewindeverbindung 40 des Außengewindes 13 und des Innengewindes 31 größer als der Abstand a2 zwischen dem ersten Unterabschnitt 11 und dem zweiten Unterabschnitt 12 des ersten Abschnitts 10 des Stehbolzens 3. In den Ausführungsbeispielen entspricht der Abstand zwischen dem Abstützbereich 15 des Stehbolzens 3 und dem Außengewinde 13 des Stehbolzens 3 dem Abstand a1 zwischen dem Abstützbereich 15 und der Gewindeverbindung 40 von dem Außengewinde 13 des Stehbolzens 3 und dem Innengewinde 31 der Aufnahme 5.

Es kann auch vorgesehen sein, dass zwischen dem ersten Unterabschnitt und dem zweiten Unterabschnitt kein Abstand besteht. In diesem Fall erstreckt sich das Außengewinde des ersten Unterabschnitts bis zum zweiten Unterabschnitt. Das Außengewinde des ersten Unterabschnitts grenzt dann unmittelbar an den zweiten Unterabschnitt an. Zwischen dem Außengewinde des ersten Unterabschnitts und dem Abstützbereich besteht jedoch ein Abstand in Axialrichtung, wie vorstehend beschrieben ist.

Wie in Fig. 3 dargestellt, ist im zweiten Unterabschnitt 12 des ersten Abschnitts 10 eine Verdickung 14 des Stehbolzens 3 angeordnet. Die Verdickung 14 besitzt einen senkrecht zur Axialrichtung 100 gemessenen Durchmesser d2. Der Durchmesser d2 der Verdickung 14 ist größer als ein Nenndurchmesser d1 des Außengewindes 13 des ersten Unterabschnitts 11 des ersten Abschnitts 10 des Stehbolzens 3. Der Abstützbereich 15 ist Teil der Verdickung 14. Der Durchmesser d2 der Verdickung 14 nimmt in dem Abstützbereich 15 in Axialrichtung 100 kontinuierlich zu. Dies ist beispielsweise in Fig. 4 dargestellt. Durch die kontinuierliche Zunahme des Durchmessers d2 der Verdickung 14 weist die Verdickung 14 insbesondere eine konische oder konvexe Außenfläche 16 auf. Durch eine derartige Formgebung der Außenfläche 16 kann ein formschlüssiger Kontakt zwischen Stehbolzen 3 und Aufnahme 5 auch bei großen Toleranzen sichergestellt werden, so dass sich der Abstützbereich 15 in Umfangsrichtung zuverlässig an einer Anlagefläche 34 der Aufnahme 5 abstützen kann.

In den Ausführungsbeispielen nach den Figuren 4 bis 6, 10 und 12 bis 18 ist die Verdickung 14 zumindest in dem Abstützbereich 15 konisch. In diesen Ausführungsbeispielen ist der Stehbolzen 3 im gesamten zweiten Unterabschnitt 12 des ersten Abschnitts 10 kegelstumpfförmig.

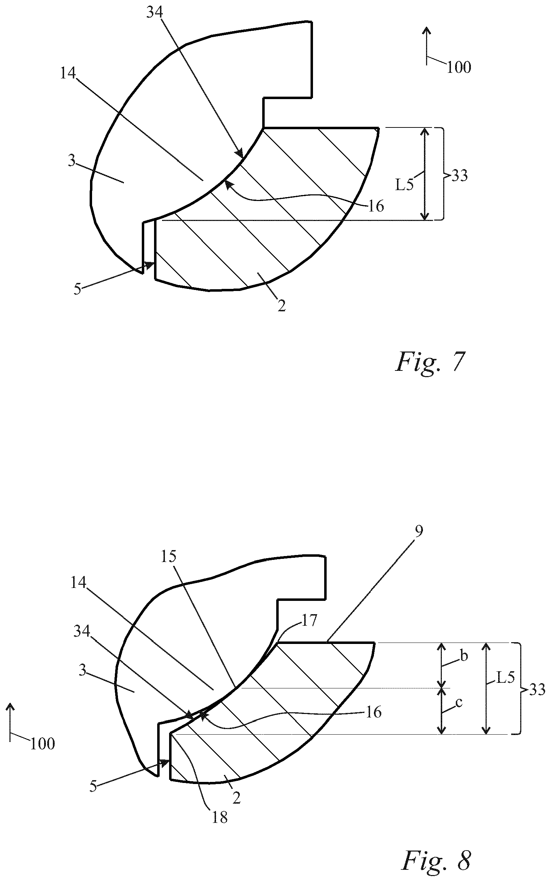

In den Ausführungsbeispielen nach den Figuren 7 bis 9 und 11 ist die Verdickung 14 zumindest in dem Abstützbereich 15 entlang der Axialrichtung 100 konvex gekrümmt.

Wie in Fig. 3 dargestellt, besitzt die Aufnahme 5 an ihrem dem zweiten Abschnitt 20 des Stehbolzens 3 zugewandten Ende 32 einen Öffnungsabschnitt 33. Der Öffnungsabschnitt 33 weist eine in Axialrichtung 100 gemessene Länge L5 auf. Die Aufnahme 5 weist eine in Axialrichtung 100 gemessene Länge L4 auf. Die Länge L5 des Öffnungsabschnitts 33 beträgt nur einen Bruchteil der Länge L4 der Aufnahme 5. In den Ausführungsbeispielen beträgt die Länge L5 des Öffnungsabschnitts 33 weniger als 20%, insbesondere weniger als 10% der Länge L4 der Aufnahme 5. Ein in Richtung senkrecht zur Axialrichtung 100 gemessener Durchmesser d3 des Öffnungsabschnitts 33 nimmt in Axialrichtung 100 zu.

Der Öffnungsabschnitt 33 erstreckt sich in Axialrichtung 100 von einem unteren Rand 18 des Öffnungsabschnitts 33 zu einem oberen Rand 17 des Öffnungsabschnitts 33. Der Öffnungsabschnitt 33 der Aufnahme 5 ist in Axialrichtung 100 von dem oberen Rand 17 begrenzt. In Ansicht entgegen der Axialrichtung 100 sind die Ränder 17 und 18 kreisförmig. Der Durchmesser des oberen Rands 17 ist größer als der Durchmesser des unteren Rands 18. Der obere Rand 17 des Öffnungsabschnitts 33 liegt unmittelbar benachbart zur Auflagefläche 9. Am oberen Rand 17 geht der Öffnungsabschnitt 33 in die Auflagefläche 9 über. Der Öffnungsabschnitt 33 der Aufnahme 5 ist in Axialrichtung 100 von der Auflagefläche 9 des Gehäuseteils 2 begrenzt. Am unteren Rand 18 des Öffnungsabschnitts 33 geht der Öffnungsabschnitt 33 in einen Gewindeabschnitt 35 der Aufnahme 5 über. Der Öffnungsabschnitt 33 grenzt an den Gewindeabschnitt 35 an. Im Gewindeabschnitt 35 der Aufnahme 5 ist das Innengewinde 31 der Aufnahme 5 angeordnet. Das Innengewinde 31 erstreckt sich über die gesamte, in Axialrichtung 100 gemessene Länge L6 des Gewindeabschnitts 35. Der Abstützbereich 13 weist in Axialrichtung 100 sowohl zum oberen Rand 17 als auch zum unteren Rand 18 einen Abstand auf.

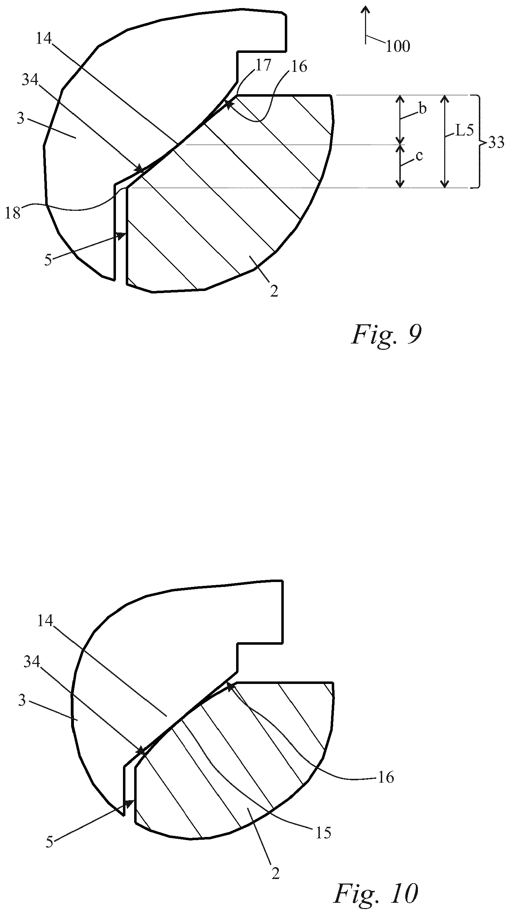

Bei der Montage des Stehbolzens 3 im Gehäuseteil 2 wird der Stehbolzen 3 durch den Öffnungsabschnitt 33 in die Aufnahme 5 des Gehäuseteils 2 eingeführt und in das Innengewinde 31 eingeschraubt. Der Öffnungsabschnitt 33 ist im Ausführungsbeispiel trichterförmig. Der Öffnungsabschnitt 33 der Aufnahme 5 besitzt die Anlagefläche 34 zur Anlage an den Stehbolzen 3. In den Ausführungsbeispielen nach den Figuren 4 bis 6, 9, 12, 13 und 17 bis 20 ist der Öffnungsabschnitt im Bereich der Anlagefläche 34 in Axialrichtung 100 konisch. In den Ausführungsbeispielen nach den Figuren 7 und 8 ist der Öffnungsabschnitt 33 im Bereich der Anlagefläche 34 konkav gekrümmt. In den Ausführungsbeispielen nach den Figuren 10 und 11 ist der Öffnungsabschnitt 33 im Bereich der Anlagefläche 34 konvex gekrümmt.

Wie in Fig. 3 dargestellt, besitzt die Verdickung 14 des Stehbolzens 3 die Außenfläche 16 zur Anlage an der Aufnahme 5 des Gehäuseteils 2. Wie in Fig. 8 dargestellt, kann vorgesehen sein, dass die Anlagefläche 34 der Aufnahme 5 des Gehäuseteils 2 und die Außenfläche 16 der Verdickung 14 des Stehbolzens 3 so aufeinander abgestimmt sind, dass die Verdickung 14 des Stehbolzens 3 in Axialrichtung 100 gemessen in einem Abstand b zur Auflagefläche 9 an der Anlagefläche 34 der Aufnahme 5 des Gehäuseteils 2 anliegt. Dies ist ebenfalls für die Ausführungsbeispiele nach den Figuren 9 bis 11 der Fall. Die Verdickung 14 liegt im Abstand b zum oberen Rand 17 an der Anlagefläche 34 der Aufnahme 5 des Gehäuseteils 2 an.

Wie in Fig. 8 dargestellt, kann vorgesehen sein, dass die Anlagefläche 34 der Aufnahme 5 des Gehäuseteils 2 und die Außenfläche 16 der Verdickung 14 des Stehbolzens 3 so aufeinander abgestimmt sind, dass die Verdickung 14 des Stehbolzens 3 in Axialrichtung 100 gemessen in einem Abstand c zum unteren Rand 18 des Öffnungsabschnitts 33 an der Anlagefläche 34 der Aufnahme 5 des Gehäuseteils 2 anliegt. Die ist ebenfalls für die Ausführungsbeispiele nach den Figuren 9 bis 11 der Fall. Bei den Ausführungsbeispielen nach den Figuren 8 bis 11 sind die Anlagefläche der Aufnahme 5 des Gehäuseteils 2 und die Außenfläche 16 der Verdickung 14 des Stehbolzens 3 so aufeinander abgestimmt, dass die Verdickung 14 des Stehbolzens 3 lediglich in Axialrichtung 100 zwischen dem oberen Rand 17 und dem unteren Rand 18 des Öffnungsabschnitts 33 an der Anlagefläche 34 der Aufnahme 5 des Gehäuseteils 2 anliegt. In anderen Worten ausgedrückt, kontaktiert der Abstützbereich 15 die Aufnahme 5 lediglich in Axialrichtung 100 zwischen dem oberen Rand 17 und dem unteren Rand 18 des Öffnungsabschnitts 33. Der Abstand b zwischen der Auflagefläche 9 des Gehäuseteils 2 und des Abstützbereichs 15 beträgt mindestens 5%, insbesondere mindestens 10%, bevorzugt mindestens 30% der Länge L5 des Öffnungsabschnitts 33. Der Abstand c zwischen dem unteren Rand 18 des Öffnungsabschnitts 33 und dem Abstützbereich 15 beträgt mindestens 5%, insbesondere mindestens 10%, bevorzugt mindestens 30% der Länge L5 des Öffnungsabschnitts 33.

Wie in Fig. 3 dargestellt, ist die Anlagefläche 34 des Öffnungsabschnitts 33 in Axialrichtung 100 in einem Abstand b1 zur Gewindeverbindung 40 von Außengewinde 13 des Stehbolzens 3 und Innengewinde 31 der Aufnahme 5 angeordnet. Der Abstand b1 zwischen der Anlagefläche 34 und der Gewindeverbindung 40 des Außengewindes 13 und des Innengewindes 31 beträgt mindestens 10%, insbesondere mindestens 20%, bevorzugt mindestens 50% des Nenndurchmessers d1 des Außengewindes 13 des zweiten Unterabschnitts 12 des ersten Abschnitts 10 des Stehbolzens 3. In den Ausführungsbeispielen beträgt der Abstand b1 zwischen der Anlagefläche 34 und der Gewindeverbindung 40 des Außengewindes 13 und des Innengewindes 31 mindestens 80% des Nenndurchmessers d1 des Außengewindes 13. In den Ausführungsbeispielen entspricht der Abstand b1 zwischen der Anlagefläche 34 und der Gewindeverbindung 40 des Außengewindes 13 und des Innengewindes 31 dem Abstand a1 zwischen dem Abstützbereich 15 des Stehbolzens 3 und der Gewindeverbindung 40 des Außengewindes 13 und des Innengewindes 31. In den Ausführungsbeispielen entspricht der Abstand zwischen der Anlagefläche 34 des Öffnungsabschnitts 33 der Aufnahme 5 und dem Innengewinde 31 der Aufnahme 5 dem Abstand b1 zwischen der Anlagefläche 34 und der Gewindeverbindung 40 des Außengewindes 13 und des Innengewindes 31. Der Abstand b1 zwischen Anlagefläche 34 und Innengewinde 31 beträgt mindestens 5% des Nenndurchmessers d1 des Außengewindes 13.

Fig. 4 zeigt ein Ausführungsbeispiel eines Stehbolzens 3 mit einer konischen Verdickung 14. Der Öffnungsabschnitt 33 ist im Ausführungsbeispiel nach Fig. 4 ebenfalls konisch. Die Anlagefläche 34 des Öffnungsabschnitts 33 erstreckt sich über die gesamte Länge L5 des Öffnungsabschnitts 33. Die Außenfläche 16 der Verdickung 14 liegt über die gesamte Länge L5 des Öffnungsabschnitts 33 an der Anlagefläche 34 des Öffnungsabschnitts 33 an. Je nach Lage der Fertigungstoleranzen kann die Außenfläche 16 auch nur in einem Bereich des Öffnungsabschnitts 33 am Öffnungsabschnitt 33 anliegen. Die konische Anlagefläche 16 der Verdickung 14 erstreckt sich über mehr als zwei Drittel der Länge L3 des zweiten Unterabschnitts 12 des ersten Abschnitts 10 des Stehbolzens 3. Es kann auch vorgesehen sein, dass sich die konische Anlagefläche 16 der Verdickung 14 über die gesamte Länge L3 des zweiten Unterabschnitts 12 des ersten Abschnitts 10 des Stehbolzens 3 erstreckt.

Im Ausführungsbeispiel weist die Verdickung 14 einen Abstand zum Außengewinde 13 auf, der dem in Fig. 3 dargestellten Abstand a2 zwischen dem Abstützbereich 15 und der Gewindeverbindung 40 von Außengewinde 13 und Innengewinde 31 entspricht. Der Abstand zwischen dem Außengewinde 13 und der Verdickung 14 beträgt mindestens 10%, insbesondere mindestens 20%, bevorzugt mindestens 50% des Nenndurchmessers d1 des Außengewindes 13 des zweiten Unterabschnitts 12 des ersten Abschnitts 10 des Stehbolzens 3.

Es kann auch vorgesehen sein, dass zwischen der Verdickung und dem Außengewinde kein Abstand besteht. In diesem Fall erstreckt sich das Außengewinde des ersten Unterabschnitts bis zur Verdickung. Das Außengewinde des ersten Unterabschnitts grenzt dann unmittelbar an die Verdickung an.

In den Ausführungsbeispielen nach den Figuren 3 bis 6 und 12 bis 17 schließt die Außenfläche 16 der konischen Verdickung 14 mit der Längsachse 90 einen Winkel α ein. Der Winkel α beträgt von 20° bis 70°, insbesondere von 30° bis 60°. Der Winkel α öffnet in Axialrichtung 100.

In den Ausführungsbeispielen nach den Figuren 3 bis 6 und 12 bis 17 schließt die Anlagefläche 34 des konischen Öffnungsabschnitts 33 mit der Längsachse 90 einen Winkel β ein. Der Winkel β beträgt von 20° bis 70°, insbesondere von 30° bis 60°. Der Winkel β öffnet in Axialrichtung 100. Im Ausführungsbeispiel nach Fig. 4 sind der Winkel α zwischen der Außenfläche 16 und der Längsachse 90 und der Winkel β zwischen der Anlagefläche 34 und der Längsachse 90 gleich groß.

Fig. 5 zeigt ein Ausführungsbeispiel mit einem Stehbolzen 3 mit konischer Verdickung 14 und mit einer Aufnahme 5 mit einem konischen Öffnungsabschnitt 33. Der Winkel β zwischen der Anlagefläche 34 des Öffnungsabschnitts 33 und der Längsachse 90 ist im Ausführungsbeispiel nach Fig. 5 größer als der Winkel α zwischen der Außenfläche 16 der Verdickung 14 und der Längsachse 90. Die Außenfläche 16 der Verdickung 14 liegt am unteren Rand 18 des Öffnungsabschnitts 33 an. Der Abstützbereich 15 liegt am unteren Rand 18 des Öffnungsabschnitts 33 an. Zwischen der Außenfläche 16 der Verdickung 14 und der Anlagefläche 34 des Öffnungsabschnitts 33 ist ein Spalt 29 ausgebildet. Der Spalt 29 erstreckt sich ausgehend vom Abstützbereich 15 in Richtung zum zweiten Abschnitt 20 des Stehbolzens 3 hin.

Fig. 6 zeigt ein Ausführungsbeispiel des Arbeitsgeräts 1 mit einem Stehbolzen 3 mit konischer Verdickung 14 und mit einer Aufnahme 5 mit einem konischen Öffnungsabschnitt 33. Beim Ausführungsbeispiel nach Fig. 6 ist der Winkel α zwischen der Außenfläche 16 der Verdickung 14 und der Längsachse 90 größer als der Winkel β zwischen der Anlagefläche 34 des Öffnungsabschnitts 33 und der Längsachse 90. Die Außenfläche 16 der Verdickung 14 liegt am oberen Rand 17 des Öffnungsabschnitts 33 an. Der Abstützbereich 15 liegt am oberen Rand 17 des Öffnungsabschnitts 33 an. Zwischen der Anlagefläche 34 des Öffnungsabschnitts 33 und der Außenfläche 16 der Verdickung 14 ist ein Spalt 29 ausgebildet. Der Spalt 29 erstreckt sich ausgehend vom oberen Rand 17 des Öffnungsabschnitts 33 in Richtung weg vom zweiten Abschnitt 20 des Stehbolzens 3. Durch geeignete Abstimmung der Winkel α und β kann eine gewünschte Lage des Abstützbereichs 15 sichergestellt werden.

Fig. 7 zeigt ein Ausführungsbeispiel des Arbeitsgeräts 1 mit einem Stehbolzen 3 mit konvexer Verdickung 14 und mit einer Aufnahme 5 mit konkavem Öffnungsabschnitt 33. Die Außenfläche 16 der Verdickung 14 liegt über die gesamte Länge L5 des Öffnungsabschnitts 33 an der konvexen Anlagefläche 34 des Öffnungsabschnitts 33 an. Der Krümmungsradius der Außenfläche 16 der Verdickung 14 entspricht dem Krümmungsradius der Anlagefläche 34 des Öffnungsabschnitts 33. Je nach Toleranzlage kann auch eine Anlage in einem oder zwei Bereichen des Öffnungsabschnitts 33 gegeben sein.

Fig. 8 zeigt ein Ausführungsbeispiel mit einem Stehbolzen 3 mit einer konvexen Verdickung 14 und mit einer Aufnahme 5 mit einem konkaven Öffnungsabschnitt 33. Der Krümmungsradius der konvexen Außenfläche 16 der Verdickung 14 ist kleiner als der Krümmungsradius der konkaven Anlagefläche 34 des Öffnungsabschnitts 33.

Fig. 9 zeigt ein Ausführungsbeispiel mit einem Stehbolzen 3 mit konvexer Verdickung 14 und mit einer Aufnahme 5 mit einem konischen Öffnungsabschnitt 33. Die Außenfläche 16 der Verdickung 14 liegt an der Anlagefläche 34 des Öffnungsabschnitts 33 in Axialrichtung 100 zwischen dem oberen Rand 17 und dem unteren Rand 18 des Öffnungsabschnitts 33 an.

Fig. 10 zeigt ein Ausführungsbeispiel mit einem Stehbolzen 3 mit einer konischen Verdickung 14 und mit einer Aufnahme 5 mit einem konvexen Öffnungsabschnitt 33.

Fig. 11 zeigt ein Ausführungsbeispiel mit einem Stehbolzen 3 mit einer konvexen Verdickung und mit einer Aufnahme 5 mit einem konvexen Öffnungsabschnitt 33. Bei den Ausführungsbeispielen nach den Figuren 8 bis 11 liegt der Abstützbereich 15 zwischen dem oberen Rand 17 und dem unteren Rand 18 des Öffnungsabschnitts 33 an.

Fig. 12 zeigt ein Ausführungsbeispiel eines Arbeitsgeräts 1 mit einem Stehbolzen 3, bei dem zwischen dem Stehbolzen 3 und dem Gehäuseteil 2 ein Ausgleichselement 30 angeordnet ist. Das Ausgleichselement 30 liegt am Abstützbereich 15 des zweiten Unterabschnitts 12 des ersten Abschnitts 10 an. Der Abstützbereich 15 des Stehbolzens 3 stützt sich zur Übertragung von Querkräften Q mittelbar über das Ausgleichselement 30 an der Aufnahme 5 ab. Das Ausgleichselement 30 ist elastisch. Es kann auch vorgesehen sein, dass das Ausgleichselement aus unelastischem, festem Material besteht. Das Ausgleichselement 30 besteht beispielsweise aus einem Elastomer. Es kann vorgesehen sein, dass das Ausgleichselement 30 ein Klebstoff ist. Dies gilt für sämtliche Ausführungsbeispiele. Dadurch kann zunächst der Stehbolzen 3 in das Gehäuseteil 2 geschraubt werden. Dann wird der Klebstoff in den Spalt zwischen dem Öffnungsabschnitt 33 des Gehäuseteils 2 und dem Stehbolzen 3 eingebracht. Nach dem Trocknen des Klebstoffs werden im Betrieb des Arbeitsgeräts 1 Querkräfte Q durch den Klebstoff vom Stehbolzen 3 auf das Gehäuseteil 2 übertragen.

Im Ausführungsbeispiel nach Fig. 12 ist der Öffnungsabschnitt 33 konisch. Das Ausgleichselement 30 besitzt eine konische Außenfläche, eine konische Innenfläche und eine zumindest näherungsweise konstante Dicke. Der zweite Unterabschnitt 12 des ersten Abschnitts 10 der Stehbolzens 3 ist zumindest teilweise konisch. Querkräfte Q werden mittelbar über das Ausgleichselement 30 in die konische Anlagefläche 34 der Aufnahme 5 eingeleitet. Es kann vorgesehen sein, dass ein Teil des in Fig. 12 als zweiter Unterabschnitt 12 gekennzeichneten Abschnitts bereits einen Teil des dritten Unterabschnitts 23 des zweiten Abschnitts 20 des Stehbolzens 3 bildet und den Bund 19 aufweist.

Der vierte Unterabschnitt ist in den Figuren 12 bis 19 nicht dargestellt, ist aber analog zu den vorherigen Ausführungsbeispielen ausgebildet.

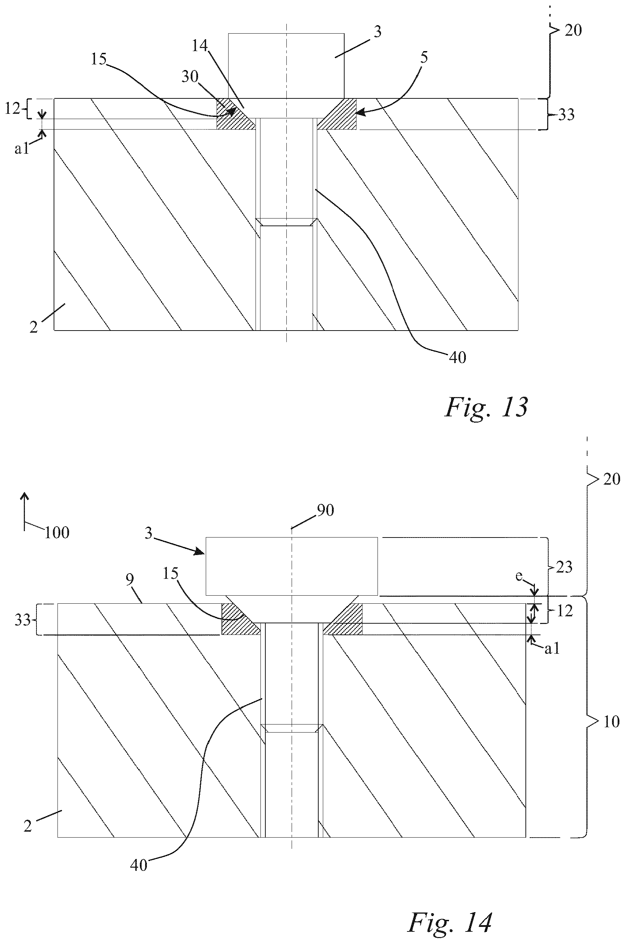

Im Ausführungsbeispiel nach Fig. 13 ist der Öffnungsabschnitt 33 zylinderförmig. Der zweite Unterabschnitt 12 des ersten Abschnitts 10 des Stehbolzens 3 ist konisch. Das Ausgleichselement 30 nach Fig. 13 füllt den gesamten Zwischenraum zwischen dem Stehbolzen 3 und der Aufnahme 5 im Bereich des Öffnungsabschnitts 33 aus. Querkräfte Q werden mittelbar über das Ausgleichselement 30 in die zylindrische Umfangswand der Aufnahme 5 eingeleitet.

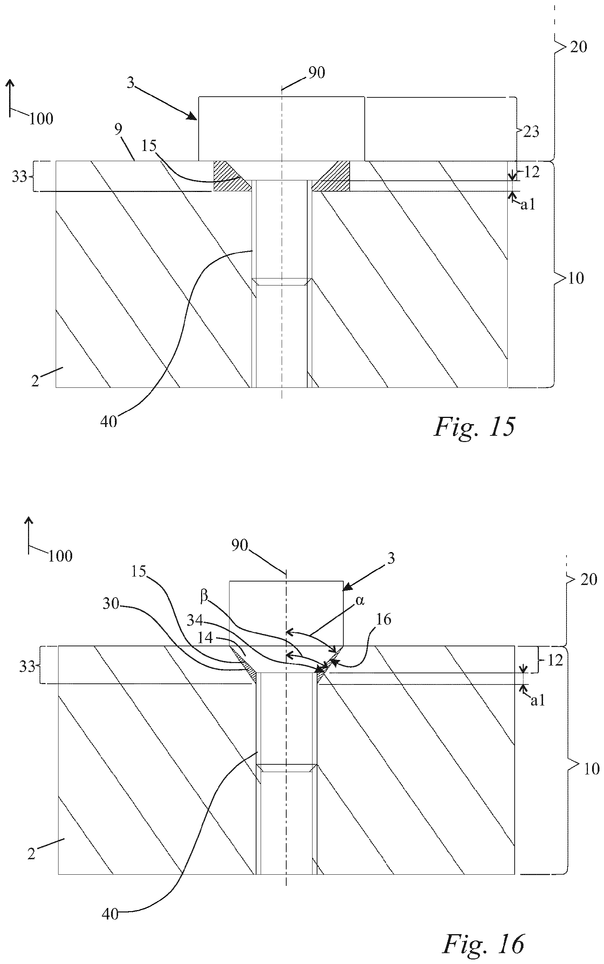

In den Ausführungsbeispielen nach den Figuren 14 und 15 ist der Öffnungsabschnitt 33 zylinderförmig. Der zweite Unterabschnitt 12 des ersten Abschnitts 10 des Stehbolzens 3 ist konisch. Das Ausgleichselement 30 nach den Figuren 14 und 15 füllt den gesamten Zwischenraum zwischen dem Stehbolzen 3 und der Aufnahme 5 im Bereich des Öffnungsabschnitts 33 aus. Der dritte Unterabschnitt 23 des zweiten Abschnitts 20 des Stehbolzens 3 ragt in Richtung senkrecht zur Axialrichtung 100 über den zweiten Unterabschnitt 12 des ersten Abschnitts 10 hervor. In den Figuren 14 und 15 sind die Stehbolzen 3 jeweils so weit wie möglich in das Gehäuseteil 2 eingeschraubt. Hierbei bildet der Abstützbereich 15 in Richtung entgegen der Axialrichtung 100 einen Anschlag. Im Ausführungsbeispiel nach Fig. 14 ist der dritte Unterabschnitt 23 in einem in Axialrichtung 100 gemessenen Abstand e zur Auflagefläche 9 des Gehäuseteils 2 angeordnet. Im Ausführungsbeispiel nach Fig. 15 liegt der dritte Unterabschnitt 23 auf der Anlagefläche 9 des Gehäuseteils 2 auf. Es besteht kein Abstand zwischen dem dritten Unterabschnitt 23 und der Anlagefläche 9. Der dritte Unterabschnitt 23 bildet einen Endanschlag, der ein weiteres Einschrauben und eine dabei mögliche Komprimierung des Ausgleichselements 30 unterbindet.

In den Ausführungsbeispielen nach den Figuren 16 und 17 ist der Öffnungsabschnitt 33 konisch. Der zweite Unterabschnitt 12 des ersten Abschnitts 10 des Stehbolzens 3 ist konisch. Das Ausgleichselement 30 nach den Figuren 16 und 17 füllt den gesamten Zwischenraum zwischen dem Stehbolzen 3 und der Aufnahme 5 im Bereich des Öffnungsabschnitts 33 aus.

Das Ausführungsbeispiel nach Fig. 16 entspricht bis auf das Ausgleichselement 30 dem Ausführungsbeispiel nach Fig. 6. Die Beschreibung zu Fig. 6 kann entsprechend bis auf die den Spalt 29 betreffende Beschreibung auf das Ausführungsbeispiel nach Fig. 16 übertragen werden. Im Ausführungsbeispiel nach Fig. 16 ist der Winkel α zwischen der Außenfläche 16 der Verdickung 14 und der Längsachse 90 größer als der Winkel β zwischen der Anlagefläche 34 des Öffnungsabschnitts 33 und der Längsachse 90.

Das Ausführungsbeispiel nach Fig. 17 entspricht bis auf das Ausgleichselement 30 dem Ausführungsbeispiel nach Fig. 5. Auf die Beschreibung zu Fig. 5 wird bis auf die den Spalt 29 betreffende Beschreibung Bezug genommen. Im Ausführungsbeispiel nach Fig. 17 ist der Winkel β zwischen der Anlagefläche 34 des Öffnungsabschnitts 33 und der Längsachse 90 größer als der Winkel α zwischen der Außenfläche 16 der Verdickung 14 und der Längsachse 90.

Sowohl im Ausführungsbeispiel nach Fig. 16 als auch im Ausführungsbeispiel nach Fig. 17 sind die Winkelunterschiede durch das Ausgleichselement 30 ausgeglichen. In beiden Ausführungsbeispielen ist das Ausgleichselement 30 aus Kunststoff, insbesondere aus Klebstoff. Querkräfte Q werden vom Stehbolzen 3 über den Klebstoff auf das Gehäuse 2 übertragen.

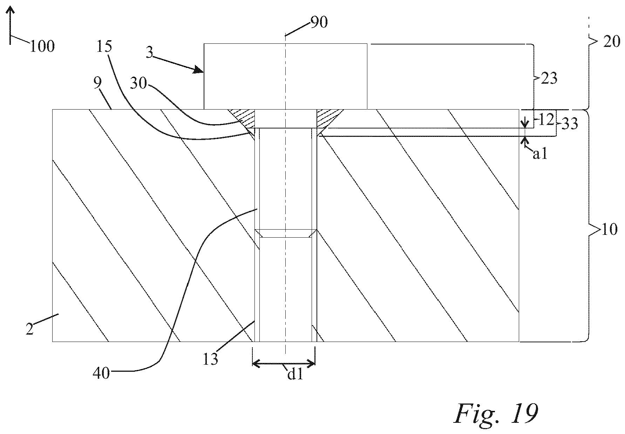

In den Ausführungsbeispielen nach den Figuren 18 und 19 ist der Öffnungsabschnitt 33 konisch. Der zweite Unterabschnitt 12 des ersten Abschnitts 10 des Stehbolzens 3 ist zylindrisch. Der zweite Unterabschnitt 12 steht in Richtung senkrecht zur Axialrichtung 100 zweckmäßig nicht über den Nenndurchmesser d1 des Außengewindes 13 des ersten Unterabschnitts 11 des ersten Abschnitts 10 des Stehbolzens 3 hervor. Beim Einschrauben des Stehbolzens 3 nähert sich die Unterseite des dritten Unterabschnittes 23 des Stehbolzens 3 der Aufnahme 5 an, so dass das Ausgleichselement 30 dazwischen zunehmend zusammengedrückt wird und dadurch radial gegen den Stehbolzen 3 und die Aufnahme 5 vorgespannt wird. Das Ausgleichselement 30 nach den Figuren 18 und 19 füllt lediglich einen Teil des Zwischenraums zwischen dem Stehbolzen 3 und der Aufnahme 5 im Bereich des Öffnungsabschnitts 33 aus. Ein dem dritten Unterabschnitt 23 des Stehbolzens 3 abgewandter Teil des Zwischenraums bleibt frei.

Im Ausführungsbeispiel nach Fig. 18 liegt der dritte Unterabschnitt 23 des zweiten Abschnitts 20 des Stehbolzens 3 lediglich auf dem Ausgleichselement 30 auf. Der dritte Unterabschnitt 23 des zweiten Abschnitts 10 des Stehbolzens 3 steht in Richtung senkrecht zur Axialrichtung 100 nicht über das Ausgleichselement 30 hervor.

Im Ausführungsbeispiel nach Fig. 19 steht der dritte Unterabschnitt 23 des zweiten Abschnitts 10 des Stehbolzens 3 in Richtung senkrecht zur Axialrichtung 100 über das Ausgleichselement 30 hervor. Der dritte Unterabschnitt 23 des zweiten Abschnitts 20 des Stehbolzens 3 liegt auf der Anlagefläche 9 des Gehäuseteils 2 auf. Der dritte Unterabschnitt 23 kann einen Endanschlag bilden, der ein weiteres Einschrauben und damit eine weitere Komprimierung des Ausgleichselements 30 unterbindet.

## Patentansprüche

1. Arbeitsgerät umfassend ein Gehäuseteil (2) und einen darin eingeschraubten Stehbolzen (3) zur Befestigung eines Werkzeugs (4) an dem Gehäuseteil (2), wobei das Arbeitsgerät (1) eine Motorkettensäge ist, wobei das Werkzeug (4) eine Führungsschiene mit einer Sägekette (8) ist, wobei der Stehbolzen (3) ein Führungselement für die Führungsschiene bildet, wobei sich der Stehbolzen (3) längs einer Axialrichtung (100) erstreckt, wobei der Stehbolzen (3) in Axialrichtung (100) einen ersten Abschnitt (10) und einen zweiten Abschnitt (20) aufweist, wobei die Axialrichtung (100) in Richtung vom ersten Abschnitt (10) zum zweiten Abschnitt (20) verläuft, wobei der erste Abschnitt (10) zumindest teilweise in einer Aufnahme (5) des Gehäuseteils (2) angeordnet ist, wobei der zweite Abschnitt (20) in Axialrichtung (100) aus dem Gehäuseteil (2) hervorragt, wobei der erste Abschnitt (10) des Stehbolzens (3) in einem ersten Unterabschnitt (11) ein Außengewinde (13) aufweist, das zur Übertragung von Längskräften (L) in ein Innengewinde (31) der Aufnahme (5) des Gehäuseteils (2) geschraubt ist,
**dadurch gekennzeichnet, dass** der erste Abschnitt (10) des Stehbolzens (3) in einem zweiten Unterabschnitt (12) einen Abstützbereich (15) zur Übertragung von Querkräften (Q) auf das Gehäuseteil (2) aufweist, der sich zumindest mittelbar an der Aufnahme (5) abstützt, und dass der Abstützbereich (15) in Axialrichtung (100) in einem Abstand (a1) zur Gewindeverbindung (40) von Außengewinde (13) und Innengewinde (31) angeordnet ist.

2. Arbeitsgerät nach Anspruch 1,
**dadurch gekennzeichnet, dass** der Abstützbereich (15) des Stehbolzens (3) in einem Abstand zum Außengewinde (13) des Stehbolzens (3) angeordnet ist.

3. Arbeitsgerät nach Anspruch 1 oder 2,
**dadurch gekennzeichnet, dass** im zweiten Unterabschnitt (12) des ersten Abschnitts (10) eine Verdickung (14) mit einem senkrecht zur Axialrichtung (100) gemessenen Durchmesser (d2) angeordnet ist, dass der Durchmesser (d2) größer als ein Nenndurchmesser (d1) des Außengewindes (13) ist, und dass der Abstützbereich (15) Teil der Verdickung (14) ist.

4. Arbeitsgerät nach Anspruch 3,
**dadurch gekennzeichnet, dass** der Durchmesser (d2) der Verdickung (14) in dem Abstützbereich (15) in Axialrichtung (100) kontinuierlich zunimmt.

5. Arbeitsgerät nach Anspruch 3 oder 4,
**dadurch gekennzeichnet, dass** die Verdickung (14) konisch ist.

6. Arbeitsgerät nach Anspruch 3 oder 4,
**dadurch gekennzeichnet, dass** die Verdickung (14) konvex gekrümmt ist.

7. Arbeitsgerät nach einem der Ansprüche 1 bis 6,
**dadurch gekennzeichnet, dass** der Abstand (a1) zwischen der Gewindeverbindung (40) und dem Abstützbereich (15) mindestens 10%, insbesondere mindestens 20%, bevorzugt mindestens 50% des Nenndurchmessers (d1) des Außengewindes (13) des zweiten Unterabschnitts (12) beträgt.

8. Arbeitsgerät nach einem der Ansprüche 1 bis 7,
**dadurch gekennzeichnet, dass** die Aufnahme (5) an ihrem dem zweiten Abschnitt (20) des Stehbolzens (3) zugewandten Ende (32) einen Öffnungsabschnitt (33) besitzt, und dass der Öffnungsabschnitt (33) eine Anlagefläche (34) zur Anlage (34) an dem Stehbolzen (3) besitzt, die in einem in Axialrichtung (100) gemessenen Abstand (b1) zum Innengewinde (31) der Aufnahme (5) angeordnet ist.

9. Arbeitsgerät nach Anspruch 8,
**dadurch gekennzeichnet, dass** der Abstand (b1) zwischen Anlagefläche (34) und Innengewinde (31) mindestens 5% des Nenndurchmessers (d1) des Außengewindes (13) beträgt.

10. Arbeitsgerät nach Anspruch 8,
**dadurch gekennzeichnet, dass** der Durchmesser (d3) des Öffnungsabschnitts (33) in Axialrichtung (100) zunimmt.

11. Arbeitsgerät nach einem der Ansprüche 8 bis 10,
**dadurch gekennzeichnet, dass** der Öffnungsabschnitt (33) konisch ist.

12. Arbeitsgerät nach einem der Ansprüche 8 bis 10,
**dadurch gekennzeichnet, dass** der Öffnungsabschnitt (33) der Aufnahme (5) konvex gekrümmt ist.

13. Arbeitsgerät nach einem der Ansprüche 8 bis 12,
**dadurch gekennzeichnet, dass** der Öffnungsabschnitt (33) der Aufnahme (5) in Axialrichtung (100) von einem oberen Rand (17) begrenzt ist, dass der Öffnungsabschnitt (33) in Richtung entgegen der Axialrichtung (100) von einem unteren Rand (18) begrenzt ist, und dass der Abstützbereich (13) in Axialrichtung (100) sowohl zum oberen Rand (17) als auch zum unteren Rand (18) einen Abstand aufweist.

14. Arbeitsgerät nach einem der Ansprüche 1 bis 13,
**dadurch gekennzeichnet, dass** der zweite Abschnitt (20) des Stehbolzens (3) an seinem dem ersten Abschnitt (10) des Stehbolzens (3) zugewandten Ende (21) einen dritten Unterabschnitt (23) mit einem Bund (19) für das Werkzeug (4) aufweist.

15. Arbeitsgerät nach einem der Ansprüche 1 bis 14,
**dadurch gekennzeichnet, dass** der zweite Abschnitt (20) des Stehbolzens (3) einen vierten Unterabschnitt (24) mit einem Spanngewinde (25) zum Aufschrauben einer Mutter (6) aufweist.

16. Arbeitsgerät nach einem der Ansprüche 1 bis 15,
**dadurch gekennzeichnet, dass** der Stehbolzen (3) auswechselbar ist.

17. Arbeitsgerät nach einem der Ansprüche 1 bis 16,
**dadurch gekennzeichnet, dass** der Stehbolzen (3) aus einem ersten Werkstoff, insbesondere aus Stahl besteht, und dass das Gehäuseteil (2) aus einem anderen, zweiten Werkstoff, insbesondere aus Magnesium besteht.

18. Stehbolzen für eine Motorkettensäge, wobei sich der Stehbolzen (3) entlang einer Längsachse (90) in einer Axialrichtung (100) erstreckt, wobei der Stehbolzen (3) in Axialrichtung (100) einen ersten Abschnitt (10) und einen zweiten Abschnitt (20) aufweist, wobei die Axialrichtung (100) in Richtung vom ersten Abschnitt (10) zum zweiten Abschnitt (20) verläuft, wobei der zweite Abschnitt (20) an seinem dem ersten Abschnitt (10) zugewandten Ende (21) einen dritten Unterabschnitt (23) mit einem Bund (19) für ein gemeinsam von einer Führungsschiene (7) und einer Sägekette (8) gebildetes Werkzeug (4) der Motorkettensäge aufweist, wobei der zweite Abschnitt (20) an seinem freien Ende (22) einen vierten Unterabschnitt (24) aufweist, wobei der dritte Unterabschnitt (23) bezüglich der Axialrichtung (100) zwischen dem vierten Unterabschnitt (24) und dem ersten Abschnitt (10) angeordnet ist, wobei der vierte Unterabschnitt (24) ein Spanngewinde (25) aufweist, auf das als Befestigungsmittel (6) eine Mutter aufgeschraubt werden kann, wobei der erste Abschnitt (10) des Stehbolzens (3) einen ersten Unterabschnitt (11) und einen zweiten Unterabschnitt (12) aufweist, wobei der erste Unterabschnitt (10) dem zweiten Abschnitt (20) abgewandt liegt, wobei der zweite Unterabschnitt (12) bezüglich der Axialrichtung (100) zwischen dem ersten Unterabschnitt (10) und dem zweiten Abschnitt (20) angeordnet ist, wobei der erste Abschnitt (10) im ersten Unterabschnitt (11) ein Außengewinde (13) aufweist, wobei der erste Abschnitt (10) im zweiten Unterabschnitt (12) einen Abstützbereich (15) zur Abstützung des Stehbolzens (3) an einer Aufnahme (5) eines Gehäuseteils (2) der Motorkettensäge aufweist, wobei der Abstützbereich (15) Teil einer Verdickung (14) mit einem senkrecht zur Axialrichtung (100) gemessenen Durchmesser (d2) ist, und wobei der Durchmesser (d2) der Verdickung (14) größer als ein Nenndurchmesser (d1) des Außengewindes (13) des ersten Unterabschnitts (11) ist, **dadurch gekennzeichnet, dass** der dritte Unterabschnitt (23) in Richtung senkrecht zur Axialrichtung (100) über den zweiten Unterabschnitt (12) hervor ragt, und dass der Durchmesser (d2) der Verdickung (14) in Axialrichtung (100) kontinuierlich zunimmt.

19. Stehbolzen nach Anspruch 18,
**dadurch gekennzeichnet, dass** der zweite Unterabschnitt (12) in Axialrichtung (100) in einem Abstand (a2) zum ersten Unterabschnitt (11) angeordnet ist.

20. Stehbolzen nach Anspruch 18 oder 19,
**dadurch gekennzeichnet, dass** das Außengewinde (13) ausschließlich im ersten Unterabschnitt (11) angeordnet ist.

## Claims

1. Implement comprising a housing part (2) and a stud bolt (3), screwed into said housing part, for fastening a tool (4) to the housing part (2), wherein the implement (1) is a motor-driven chainsaw, wherein the tool (4) is a guide bar with a saw chain (8), wherein the stud bolt (3) forms a guide element for the guide bar, wherein the stud bolt (3) extends along an axial direction (100), wherein the stud bolt (3) has a first portion (10) and a second portion (20) in the axial direction (100), wherein the axial direction (100) extends in the direction from the first portion (10) to the second portion (20), wherein the first portion (10) is arranged at least partially in a receptacle (5) of the housing part (2), wherein the second portion (20) projects from the housing part (2) in the axial direction (100), wherein, in a first sub-portion (11), the first portion (10) of the stud bolt (3) has an external thread (13) which, for transmission of longitudinal forces (L), is screwed into an internal thread (31) of the receptacle (5) of the housing part (2),
**characterized in that**, in a second sub-portion (12), the first portion (10) of the stud bolt (3) has a supporting region (15) for transmission of transverse forces (Q) to the housing part (2), which supporting region is supported at least indirectly against the receptacle (5), and **in that** the supporting region (15) is arranged at a distance (a1) from the threaded connection (40) of external thread (13) and internal thread (31) in the axial direction (100).

2. Implement according to Claim 1,
**characterized in that** the supporting region (15) of the stud bolt (3) is arranged at a distance from the external thread (13) of the stud bolt (3).

3. Implement according to Claim 1 or 2,
**characterized in that** a thickening (14) with a diameter (d2), which is measured perpendicularly to the axial direction (100), is arranged in the second sub-portion (12) of the first portion (10), **in that** the diameter (d2) is greater than a nominal diameter (d1) of the external thread (13), and **in that** the supporting region (15) is part of the thickening (14).

4. Implement according to Claim 3,
**characterized in that**, in the supporting region (15), the diameter (d2) of the thickening (14) increases continuously in the axial direction (100).

5. Implement according to Claim 3 or 4,
**characterized in that** the thickening (14) is conical.

6. Implement according to Claim 3 or 4,
**characterized in that** the thickening (14) is convexly curved.

7. Implement according to one of Claims 1 to 6,
**characterized in that** the distance (a1) between the threaded connection (40) and the supporting region (15) is at least 10%, in particular at least 20%, preferably at least 50%, of the nominal diameter (d1) of the external thread (13) of the second sub-portion (12).

8. Implement according to one of Claims 1 to 7,
**characterized in that**, at its end (32) close to the second portion (20) of the stud bolt (3), the receptacle (5) has an opening portion (33), and **in that** the opening portion (33) has an abutment surface (34) for abutment (34) against the stud bolt (3), which abutment surface is arranged at a distance (b1), measured in the axial direction (100), from the internal thread (31) of the receptacle (5).

9. Implement according to Claim 8,
**characterized in that** the distance (b1) between abutment surface (34) and internal thread (31) is at least 5% of the nominal diameter (d1) of the external thread (13).

10. Implement according to Claim 8,
**characterized in that** the diameter (d3) of the opening portion (33) increases in the axial direction (100).

11. Implement according to one of Claims 8 to 10,
**characterized in that** the opening portion (33) is conical.

12. Implement according to one of Claims 8 to 10,
**characterized in that** the opening portion (33) of the receptacle (5) is convexly curved.

13. Implement according to one of Claims 8 to 12,
**characterized in that** the opening portion (33) of the receptacle (5) is delimited by an upper edge (17) in the axial direction (100), **in that** the opening portion (33) is delimited by a lower edge (18) in the direction opposite to the axial direction (100), and **in that** the supporting region (13) is at a distance both from the upper edge (17) and from the lower edge (18) in the axial direction (100).

14. Implement according to one of Claims 1 to 13,
**characterized in that**, at its end (21) close to the first portion (10) of the stud bolt (3), the second portion (20) of the stud bolt (3) has a third sub-portion (23) with a collar (19) for the tool (4).

15. Implement according to one of Claims 1 to 14,
**characterized in that** the second portion (20) of the stud bolt (3) has a fourth sub-portion (24) with a tightening thread (25) for screwing a nut (6) onto it.

16. Implement according to one of Claims 1 to 15,
**characterized in that** the stud bolt (3) is interchangeable.

17. Implement according to one of Claims 1 to 16,
**characterized in that** the stud bolt (3) consists of a first material, in particular of steel, and **in that** the housing part (2) consists of a different, second material, in particular of magnesium.

18. Stud bolt for an implement according to one of Claims 1 to 17, wherein the stud bolt (3) extends along a longitudinal axis (90) in an axial direction (100), wherein the stud bolt (3) has a first portion (10) and a second portion (20) in the axial direction (100), wherein the axial direction (100) extends in the direction from the first portion (10) to the second portion (20), wherein, at its end (21) close to the first portion (10), the second portion (20) has a third sub-portion (23) with a collar (19) for a tool (4) of the motor-driven chainsaw, which tool is formed jointly by a guide bar (7) and a saw chain (8), wherein, at its free end (22), the second portion (20) has a fourth sub-portion (24), wherein the third sub-portion (23) is arranged between the fourth sub-portion (24) and the first portion (10) in relation to the axial direction (100), wherein the fourth sub-portion (24) has a tightening thread (25) onto which a nut can be screwed as a fastening means (6), wherein the first portion (10) of the stud bolt (3) has a first sub-portion (11) and a second sub-portion (12), wherein the first sub-portion (10) is situated remotely from the second portion (20), wherein the second sub-portion (12) is arranged between the first sub-portion (10) and the second portion (20) in relation to the axial direction (100), wherein, in the first sub-portion (11), the first portion (10) has an external thread (13), **characterized in that**, in the second sub-portion (12), the first portion (10) has a supporting region (15) for supporting the stud bolt (3) against a receptacle (5) of a housing part (2) of the motor-driven chainsaw, **in that** the supporting region (15) is part of a thickening (14) with a diameter (d2), which is measured perpendicularly to the axial direction (100), **in that** the diameter (d2) of the thickening (14) is greater than a nominal diameter (d1) of the external thread (13) of the first sub-portion (11), **in that** the third sub-portion (23) protrudes beyond the second sub-portion (12) in a direction perpendicular to the axial direction (100), and **in that** the diameter (d2) of the thickening (14) increases continuously in the axial direction (100).

19. Stud bolt according to Claim 18,
**characterized in that** the second sub-portion (12) is arranged at a distance (a2) from the first sub-portion (11) in the axial direction (100).

20. Stud bolt according to Claim 18 or 19,
**characterized in that** the external thread (13) is arranged exclusively in the first sub-portion (11).

## Revendications

1. Outil de travail comprenant une partie boîtier (2) et un boulon fileté (3) vissé dans celle-ci pour la fixation d'un outil (4) sur la partie boîtier (2), l'outil de travail (1) étant une tronçonneuse à moteur, l'outil (4) étant un rail de guidage avec une chaîne de scie (8), le goujon (3) formant un élément de guidage pour le rail de guidage, le goujon (3) s'étendant le long d'une direction axiale (100), le goujon (3) présentant dans la direction axiale (100) une première partie (10) et une deuxième partie (20), la direction axiale (100) s'étendant dans la direction allant de la première partie (10) à la deuxième partie (20), la première partie (10) étant agencée au moins partiellement dans un logement (5) de la partie boîtier (2), la deuxième partie (20) dépassant de la partie boîtier (2) dans la direction axiale (100), la première partie (10) du goujon (3) présentant un filetage extérieur (13) dans une première sous-partie (11), qui est vissé dans un filetage intérieur (31) du logement (5) de la partie boîtier (2) pour la transmission de forces longitudinales (L),
**caractérisé en ce que** la première partie (10) du goujon (3) présente, dans une deuxième sous-partie (12), une zone d'appui (15) pour la transmission de forces transversales (Q) sur la partie boîtier (2), qui s'appuie au moins indirectement sur le logement (5), et **en ce que** la zone d'appui (15) est agencée dans la direction axiale (100) à une distance (a1) de la liaison filetée (40) du filetage extérieur (13) et du filetage intérieur (31).

2. Outil de travail selon la revendication 1,
**caractérisé en ce que** la zone d'appui (15) du goujon (3) est agencée à distance du filetage extérieur (13) du goujon (3).

3. Outil de travail selon la revendication 1 ou la revendication 2, **caractérisé en ce que**, dans la deuxième sous-partie (12) de la première partie (10), est agencé un renflement (14) ayant un diamètre (d2) mesuré perpendiculairement à la direction axiale (100), **en ce que** le diamètre (d2) est supérieur à un diamètre nominal (d1) du filetage extérieur (13), et **en ce que** la zone d'appui (15) fait partie du renflement (14).

4. Outil de travail selon la revendication 3,
**caractérisé en ce que** le diamètre (d2) du renflement (14) dans la zone d'appui (15) augmente de manière continue dans la direction axiale (100).

5. Outil de travail selon la revendication 3 ou la revendication 4, **caractérisé en ce que** le renflement (14) est conique.

6. Outil de travail selon la revendication 3 ou la revendication 4, **caractérisé en ce que** le renflement (14) est incurvé de manière convexe.

7. Outil de travail selon l'une des revendications 1 à 6,
**caractérisé en ce que** la distance (a1) entre la liaison filetée (40) et la zone d'appui (15) est d'au moins 10%, notamment d'au moins 20%, de préférence d'au moins 50%, du diamètre nominal (d1) du filetage extérieur (13) de la deuxième sous-partie (12).

8. Outil de travail selon l'une des revendications 1 à 7,
**caractérisé en ce que** le logement (5) présente une portion d'ouverture (33) à son extrémité (32) tournée vers la deuxième partie (20) du goujon (3), et **en ce que** la portion d'ouverture (33) possède une surface d'appui (34) pour un appui (34) sur le goujon (3), qui est agencée à une distance (b1) du filetage intérieur (31) du logement (5), mesurée dans la direction axiale (100).

9. Outil de travail selon la revendication 8,
**caractérisé en ce que** la distance (b1) entre la surface d'appui (34) et le filetage intérieur (31) représente au moins 5% du diamètre nominal (d1) du filetage extérieur (13).

10. Outil de travail selon la revendication 8,
**caractérisé en ce que** le diamètre (d3) de la portion d'ouverture (33) augmente dans la direction axiale (100).

11. Outil de travail selon l'une des revendications 8 à 10,
**caractérisé en ce que** la portion d'ouverture (33) est conique.

12. Outil de travail selon l'une des revendications 8 à 10,
**caractérisé en ce que** la portion d'ouverture (33) du logement (5) est incurvée de manière convexe.

13. Outil de travail selon l'une des revendications 8 à 12,
**caractérisé en ce que** la portion d'ouverture (33) du logement (5) est délimitée dans la direction axiale (100) par un bord supérieur (17), **en ce que** la portion d'ouverture (33) est délimitée dans la direction opposée à la direction axiale (100) par un bord inférieur (18), et **en ce que** la zone d'appui (13) présente dans la direction axiale (100) un écart aussi bien par rapport au bord supérieur (17) que par rapport au bord inférieur (18).

14. Outil de travail selon l'une des revendications 1 à 13,
**caractérisé en ce que** la deuxième partie (20) du goujon (3) présente, à son extrémité (21) tournée vers la première partie (10) du goujon (3), une troisième sous-partie (23) avec un collet (19) pour l'outil (4).

15. Outil de travail selon l'une des revendications 1 à 14,
**caractérisé en ce que** la deuxième partie (20) du goujon (3) présente une quatrième sous-partie (24) avec un filetage de serrage (25) pour visser un écrou (6).

16. Un outil de travail selon l'une des revendications 1 à 15,
**caractérisé en ce que** le goujon (3) est interchangeable.

17. Outil de travail selon l'une des revendications 1 à 16,
**caractérisé en ce que** le goujon (3) est constitué d'un premier matériau, notamment de l'acier, et **en ce que** la partie boîtier (2) est constituée d'un autre deuxième matériau, notamment du magnésium.

18. Goujon pour un outil de travail selon l'une des revendications 1 à 17, le goujon (3) s'étendant le long d'un axe longitudinal (90) dans une direction axiale (100), le goujon (3) présentant dans la direction axiale (100) une première partie (10) et une deuxième partie (20), la direction axiale (100) s'étendant dans la direction de la première partie (10) vers la deuxième partie (20), la deuxième partie (20) présentant, à son extrémité (21) tournée vers la première partie (10), une troisième sous-partie (23) ayant un collet (19) pour un outil (4) de la tronçonneuse à moteur formé conjointement par un rail de guidage (7) et une chaîne de scie (8), la deuxième partie (20) présentant, à son extrémité libre (22), une quatrième sous-partie (24), la troisième sous-partie (23) étant agencée entre la quatrième sous-partie (24) et la première partie (10) par rapport à la direction axiale (100), la quatrième sous-partie (24) présentant un filetage de serrage (25) sur lequel un écrou est apte à être vissé en tant que moyen de fixation (6), la première partie (10) du goujon (3) présentant une première sous-partie (11) et une deuxième sous-partie (12), la première sous-partie (10) étant située à l'opposé de la deuxième partie (20), la deuxième sous-partie (12) étant agencée entre la première sous-partie (10) et la deuxième partie (20) par rapport à la direction axiale (100), la première partie (10) présentant un filetage extérieur (13) dans la première sous-partie (11),
**caractérisée en ce que** la première partie (10) présente, dans la deuxième sous-partie (12), une zone d'appui (15) pour un appui du goujon (3) sur un logement (5) d'une partie boîtier (2) de la tronçonneuse à moteur, **en ce que** la zone d'appui (15) fait partie d'un renflement (14) ayant un diamètre (d2) mesuré perpendiculairement à la direction axiale (100), **en ce que** le diamètre (d2) du renflement (14) est supérieur à un diamètre nominal (d1) du filetage extérieur (13) de la première sous-partie (11), **en ce que** la troisième sous-partie (23) fait saillie de la deuxième sous-partie (12) dans une direction perpendiculaire à la direction axiale (100), et **en ce que** le diamètre (d2) du renflement (14) augmente de manière continue dans la direction axiale (100).

19. Goujon selon la revendication 18,
**caractérisé en ce que** la deuxième sous-partie (12) est agencée à une distance (a2) de la première sous-partie (11) dans la direction axiale (100).

20. Goujon selon la revendication 18 ou la revendication 19,
**caractérisé en ce que** le filetage extérieur (13) est agencé exclusivement dans la première sous-partie (11).
